# EUROPEAN PATENT APPLICATION

(11) **EP 1 097 824 A2**
(43) Date of publication of application: **09.05.2001**
(21) Application number: 00309675.7
(22) Date of filing: 01.11.2000
(51) Int. Cl.: B60C 9/22

(54) **Radial tyre for motorcycle**

(30) Priority: 02.11.1999 JP 31299399
(71) Applicant: Sumitomo Rubber Industries Ltd., Kobe-shi, Hyogo-ken (JP)
(72) Inventor: Ishikawa, Takeshi, c/o Sumitomo Rubber Indust. Ltd, Kobe-shi, Kyogo-ken (JP)
(74) Representative: Stewart, Charles Geoffrey

(57) **Abstract**

The radial tyre for motorcycles comprises a carcass (6) comprising a radial ply, and a band (7) disposed radially outside the carcass (6) in the tread portion (2). The tread portion (2) is curved so that the maximum tyre section width (Wt) lies between the tread edges (Te). The band (7) is made of spirally wound cords (11), wherein each cord (11) has a variable tension modulus which continuously increases from its zero elongation to 1.0 % elongation. Preferably, the elongation at rupture of the band cord (11) is not more than 4.0 %. The bending rigidity index of the band (7), defined as the product of a bending rigidity of a band cord and the band cord count per 5 cm width, is in a range of from 300 to 600 gram centimetre.

## Description

The present invention relates to a pneumatic tyre, more particularly to a radial tyre for motorcycles having a tread band capable of improving the high-speed straight-running stability and traction during high speed cornering.

In recent years, a carcass of a radial ply structure is employed in motorcycle tyres as being suitable for high speed running. To reinforce the tread portion of such a tyre, a breaker of cross ply structure was used at first following the technique conventional radial tyres for four-wheeled vehicles. In recent years, a spiral cord band has also been used.

In the case of the crossed ply breaker, as the bending rigidity of the tread portion is high, good cornering power is obtained. However, as the lateral stiffness of the tyre is relatively low considering its high bending rigidity, vibrations are liable to occur during high speed straight running which deteriorates high speed stability.

In the case of a spiral cord band, as the bending rigidity of the tread portion is not so increased, the vibrations during high speed straight running are controlled and furthermore ground contact is improved. Thus, straight running stability is improved. However, during cornering, the tyre rigidity tends to be insufficient, and especially in the case of large-size motorcycles, traction becomes insufficient. Therefore, cornering performance is not good.

It is therefore, an object of the present invention to provide a radial tyre for motorcycles, in which sufficient traction can be obtained during cornering to improve cornering performance, and the high speed straight running stability is also improved at the same time.

According to the present invention, a radial tyre for motorcycles comprises a tread portion with tread edges, a pair of sidewall portions, a pair of bead portions, a carcass comprising a radial ply, and a band disposed radially outside the carcass in the tread portion, the tread portion being curved so that the maximum tyre section width lies between the tread edges, and the band made of spirally wound cords, each cord having a variable tension modulus which continuously increases from its zero elongation to 1.0 % elongation.

Preferably, the elongation at rupture of the band cord is not more than 4.0 %. Preferably also the bending rigidity index of the band defined as the product of a bending rigidity of a band cord and the band cord count per 5 cm width is in a range of from 300 to 600 gram centimetre.

An embodiment of the present invention will now be described in detail in conjunction with the accompanying drawings:
Fig.1 is a cross sectional view of a radial tyre for motorcycles according to the present invention;
Fig.2 is a perspective view showing a tape used to form a tread band;
Fig.3 is a cross sectional view showing an exemplary way of winding the tape;
Fig.4 is a schematic cross sectional view of a band cord;
Fig.5 is an enlarged perspective view of a strand thereof; and

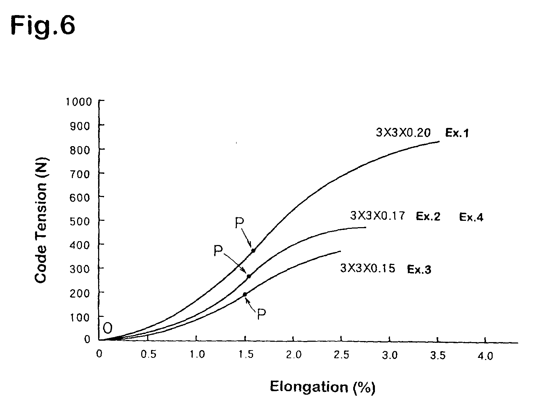

Fig.6 is a graph showing tension-elongation curves of band cords used in comparison tests.

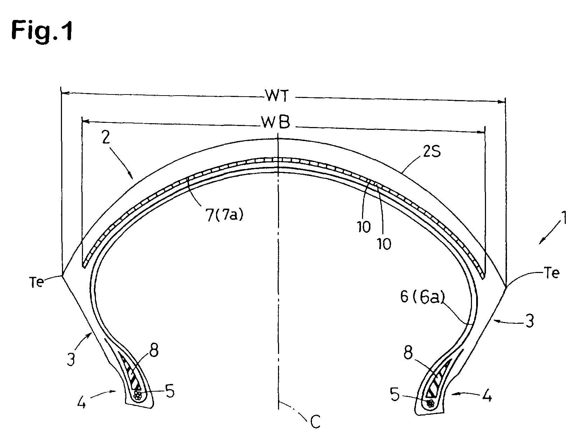

In Fig.1, a radial tyre 1 according to the present invention is for the rear wheel of a large-size motorcycle. The tyre 1 comprises a tread portion 2 with tread edges Te, a pair of axially spaced bead portions 4, and a pair of sidewall portions 3 extending between the tread edges Te and bead portions. In a meridian section of the tyre, the tread portion 2 is curved so that the maximum tyre section width WT lies between the tread edges Te. The tread face 2S has a relatively small radius of curvature in comparison with passenger car tyres for example.

The tyre 1 further comprises a carcass 6 extending between the bead portions 4, and a band 7 disposed radially outside the carcass 6 in the tread portion 2.

The carcass 6 comprises a ply 6A of cords arranged radially at an angle of from 70 to 90 degrees with respect to the tyre equator and extending between the bead portions 4 through the tread portion 2 and sidewall portions 3 and turned up around the bead core 5 in each bead portion 4 from the inside to the outside of the tyre so as to form a pair of turnup portions and a main portion therebetween. For the carcass cords, organic fibre cords, e.g. nylon, polyester, rayon, aromatic polyamide and the like are used.

Between the main portion and each turnup portion, there is disposed a bead apex 8 made of hard rubber tapering radially outward from the bead core 5.

In this example, the carcass 6 comprises a single ply 6A of nylon fibre cords arranged radially at 90 degrees. The turnup portion is extended radially outwardly beyond the radially outer end of the bead apex and terminates at a short distance therefrom. But, it is also possible to terminate it near the tread edge Te to increase the tyre lateral stiffness.

The band 7 is made of spirally wound cords 11 and disposed along the radially outside of the carcass 6. With respect to the tyre equator, the cord angle is almost zero or a very small value of five degrees at most. The axial width WB of the band 7 is set in the range of from 0.8 to 0.95 times the maximum tyre section width WT. In this example, the band cords 11 are wound into a single layer 7a. In other words, the band 7 has a single ply structure.

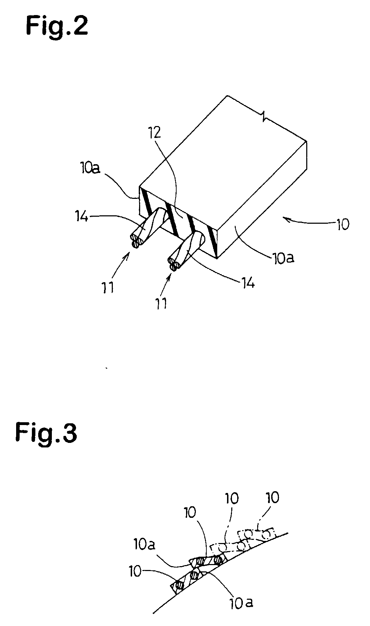

In order to improve production efficiency and dimensional accuracy such as cord spacings, the band 7 is formed by spirally winding a tape 10 of rubber 12 in which the band cords 11 are embedded in parallel with each other along the length thereof as shown in Fig.2. In this example, two parallel band cords 11 are embedded. For example, a tape 10 is wound continuously from one of the tread edges Te to the other on the radially outer surface of the carcass 6. However, another arrangement is also possible, for example, winding a plurality of tapes 10 spirally from the tyre equator C to the tread edges Te. During winding the tape or tapes 10, side edges 10a thereof 10 can be overlapped as shown in Fig.3 to prevent loosening.

In order to provide sufficient strength for the band, the tension at rupture of the band cord 11 is set in the range of not less than 350 N. The elongation at rupture of the band cord 11 is set in a range of not more than 4%.

The band cord 11 has a specific variable tension modulus which continuously increases from its zero elongation to 1.0 % elongation at least in this range. The maximum tension modulus occurs at an elongation above 1.0 %, preferably in a range of from 1.3 to 1.8 %. From the elongation at the maximum tension modulus to the elongation at rupture, the tension modulus continuously decreases.

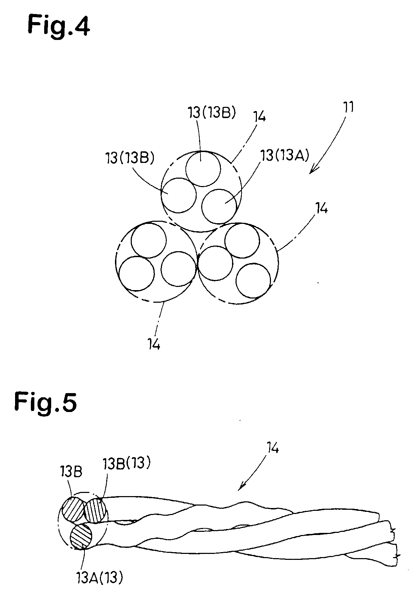

The tension-elongation curve of such a cord 11 is, as shown in Fig.5 made up of a concave curve from the origin 0 to the inflection point P and a convex curve from the inflection point P. Thus, it has a S-shape. At the inflection point P, the tension modulus becomes maximum. In the range of from 0 to 1.0 % elongation at least, the load-elongation curve is a continuous concave curve having no straight part.

In order to improve cornering performance by appropriately increasing the tyre rigidity while maintaining the advantages of the spiral cord structure, the band 7 preferably has a bending rigidity index in the range of from 300 to 600 gram centimetre, wherein the bending rigidity index is the product G x N of the bending rigidity G of a band cord and the count N of the band cords per 5 cm width. The bending rigidity G is defined as a force in gram centimetre required to bend a cord 15 degrees, which is measured with a V-5 stiffness tester model 150-D of Taber Industries, U.S.A. As to the cord count N, when the band 7 is composed of two or more plies 7a, the count N is accordingly the summation of the cord counts of all the plies 7a. If the bending rigidity index is less than 300 gram centimetre, the tyre rigidity becomes insufficient, and the cornering performance is not fully improved. If the bending rigidity index is more than 600 gram centimetre, the tyre rigidity becomes too high, and the ride comfort deteriorates.

To meet the above-mentioned requirements, the band cord 11 is composed of steel filaments 13 twisted together.

In the example shown in Fig.4, the cord has a 3 x 3 structure, namely, three steel filaments 13 are first twisted together into a strand 14, and three strands 14 are secondly twisted together into a cord 11. The three steel filaments 13 in each strand 14 include at least one waved filament 13A as shown in Fig.5. More concretely, each strand 14 is composed of one waved filament 13A and two non-waved filaments 13B or two waved filaments 13A and one non-waved filament 13B. The non-waved filament 13B is a straight filament before twisted together. The waved filament 13A is a non-straight filament waved two-dimensionally or three-dimensionally (spirally) before twisted together.

Such a 3 x 3 structure is preferable because the cord can be formed compactly in comparison with 3 x 7, 3 x 4, 4 x 4 structures, and the bending rigidity is high for the tension modulus. Although the band cords 11 are a steel cord, the bending rigidity of the tread portion is, like organic fibre cords, prevented from increasing excessively. Therefore, vibrations during high-speed straight running are controlled, and ride comfort is also improved. Further, as the bending rigidity of the band cord is high in comparison with an organic fibre cord, the tyre is provided with rigidity which makes it possible to obtain sufficient traction during cornering, and the cornering performance can be improved. As the tension modulus continuously changes, if running conditions such as the tyre load, running speed, bank angle and the like are changed, abrupt changing of tyre characteristics can be prevented. Thus, handling, running safety and the like are improved.

### Comparison Tests

Test tyres of size 180/55ZR17 (Rim size:17XMT5.50) having the structure shown in Fig.1 and specifications shown in Table 1 were made and tested as follows.

A motorcycle (750cc 4-stroke engine) provided on the rear wheel with the test tyre inflated to 250 kPa was run on a dry asphalt road on a tyre test course, and during straight running and cornering at high speed, high speed stability, nimbleness in handling, ride comfort and cornering grip were evaluated into five ranks by the test rider. The larger the rank number, the better the performance. Test results are shown in Table 1. The specifications of the front tyre are shown in Table 2. The tension-elongation curves of the band cords are shown in Fig.5.

**Table 1**

| Tyre | Ref.1 | Ex.1 | Ex.2 | Ex.3 | Ex.4 |
|---|---|---|---|---|---|
| Carcass | | | | | |
| Ply number | 1 | 1 | 1 | 1 | 1 |
| Cord material | nylon 2/1440dtex | nylon 2/1440dtex | nylon 2/1440dtex | nylon 2/1440dtex | nylon 2/1440dtex |
| Cord angle (deg.) | 90 | 90 | 90 | 90 | 90 |
| Cord count (/5cm) | 38 | 38 | 38 | 38 | 38 |
| Bead apex height (mm) | 20 | 20 | 20 | 20 | 10 |

| Band | | | | | |
|---|---|---|---|---|---|
| Ply number | 1 | 1 | 1 | 1 | 1 |
| Structure | spiral | spiral | spiral | spiral | spiral |
| Cord material | aromatic polyamide 2/1670dtex | steel 3X3X0.20 | steel 3X3X0.17 | steel 3X3X0.15 | steel 3X3X0.17 |
| Cord count (/5cm) | 50 | 38 | 38 | 38 | 38 |
| Bending rigidity index (g cm) | | 740 | 430 | 330 | 430 |
| High speed stability | 4 | 3.7 | 3.9 | 4 | 4 |
| Cornering grip | 3.5 | 3.75 | 3.75 | 4 | 4.1 |
| Ride comfort | 4 | 3.5 | 4 | 3.9 | 4 |
| Nimbleness in handling | 4 | 3.7 | 3.9 | 4 | 4.1 |

**Table 2**

| Tyre size | 120/70ZR17 |
|---|---|
| Carcass | |
| Ply number | 2 |
| Cord material | nylon 2/1440 dtex |
| Cord angle (deg.) | 88 |
| Cord count (/5cm) | 41 |

| Breaker | |
|---|---|
| Ply number | 2(cross ply structure) |
| Cord material | Aromatic polyamide 2/1670 dtex |
| Cord angle (deg.) | 17 |
| Cord count (/5cm) | 35 |
| Inner pressure | 250kPa |
| Rim size | 17XMT3.50 |

As described above, in the motorcycle radial tyres according to the present invention, as the band is made of steel cords having specific elongation characteristics, sufficient traction can be obtained during cornering to improve the cornering performance, while displaying advantages of a spiral cord band structure such as good high speed stability.

The present invention can be suitably applied to a rear tyre for large-size motorcycles.

## Claims

1. A radial tyre (1) for a motorcycle comprising a tread portion (2) with tread edges (Te), a pair of sidewall portions (3), a pair of bead portions (4), a carcass (6) comprising a radial ply, a band (7) disposed radially outside the carcass (6) in the tread portion (2), said tread portion (2) being curved so that the maximum tyre section width (Wt) lies between the tread edges (Te), and said band (7) being made of spirally wound cords (11), characterised in that each said cord (11) has a variable tension modulus which continuously increases from its zero elongation to 1.0 % elongation.

2. A radial tyre according to claim 1, characterised in that the elongation at rupture of the band cord (11) is not more than 4.0 %.

3. A radial tyre according to claim 1, characterised in that an elongation at which the tension modulus becomes maximum is in a range of from 1.3 to 1.8 %.

4. A radial tyre according to claim 2, characterised in that an elongation at which the tension modulus becomes maximum is in a range of from 1.3 to 1.8 %, and from this elongation to the elongation at rupture, the tension modulus continuously decreases.

5. A radial tyre according to claim 1, 2 or 3, characterised in that a bending rigidity index of the band (7) which is defined as the product of a bending rigidity in gram centimetre of a band cord and the band cord count per 5 cm width is in a range of from 300 to 600 gram centimetre.
